# EUROPÄISCHE PATENTANMELDUNG

(11) **EP 1 484 596 A1**
(43) Veröffentlichungstag der Anmeldung: **08.12.2004**
(21) Anmeldenummer: 03012198.2
(22) Anmeldetag: 05.06.2003
(51) Int. Cl.: G01N 21/21, G01N 21/41, G01N 21/84

(54) **Verfahren und Vorrichtung zur dreidimensionalen Bestimmung des Brechungsindex von transparenten Schichten**

(71) Anmelder: Fraunhofer-Gesellschaft zur Förderung der angewandten Forschung e.V., 80686 München (DE)
(72) Erfinder: Stumpe, Joachim, Dr., 14641 Nauen (DE); Jung, Christoph, Dipl.-Phys., 14471 Potsdam (DE); Kulikovska, Olga, Dr., 14165 Berlin (DE)
(74) Vertreter: Gagel, Roland, Dr.

(57) **Zusammenfassung**

Die vorliegende Erfindung betrifft ein Verfahren sowie eine Vorrichtung zur dreidimensionalen Bestimmung des Brechungsindex von transparenten Schichten, bei denen die Schicht (1) unter verschiedenen Einfallswinkeln (5) mit polarisiertem Licht durchstrahlt und Änderungen der Polarisation des Lichtes beim Durchgang durch die Schicht (1) gemessen und ausgewertet werden. Das Verfahren zeichnet sich dadurch aus, dass die Messung durch ein Immersionsmedium (3) hindurch erfolgt, zwischen das die Schicht (1) eingebracht wird.

Mit dem vorliegenden Verfahren wird eine hochgenaue Bestimmung des Brechungsindex anisotroper dünner Schichten in allen drei Raumrichtungen ermöglicht.

## Beschreibung

### Technisches Anwendungsgebiet

Die vorliegende Erfindung betrifft ein Verfahren sowie eine Vorrichtung zur dreidimensionalen Bestimmung des Brechungsindex von transparenten Schichten, bei dem die Schicht unter verschiedenen Einfallswinkeln mit polarisiertem Licht durchstrahlt und Änderungen der Polarisation des Lichtes beim Durchgang durch die Schicht gemessen und ausgewertet werden.

Verfahren dieser Art sind auch unter dem Begriff Transmissionsellipsometrie oder Transmissionspolarimetrie bekannt. Bei diesen Verfahren wird die Schicht mit polarisiertem Licht durchstrahlt und eine durch die Schicht verursachte Drehung der Polarisation des Lichtes erfasst. Die eingesetzte Messanordnung umfasst in der Regel eine Lichtquelle, jeweils zumindest einen Polarisator vor und hinter dem Messvolumen für die Probe sowie einen Photodetektor, der die bei verschiedenen Stellungen der Polarisatoren auftreffende Lichtintensität misst.

Die Vermessung des dreidimensionalen Brechungsindex optisch anisotroper Schichten spielt im Bereich optischer Technologien, in denen anisotrope Schichten mit definierten optischen Eigenschaften benötigt werden, eine zunehmend größere Rolle. So sind die anisotropen optischen Eigenschaften von dünnen Schichten oder Filmen bspw. für die Displaytechnologie von höchster Bedeutung. Sehr dünne Schichten sind für die Nanotechnologie von großem Interesse. Dickere Filme finden auch als Wellenleiter für die optische Informationsverarbeitung Anwendung. Neuere Anwendungsfelder betreffen die Bereiche optischer Sicherheitselemente sowie reversibler optischer Datenspeicherung. Ein konkretes Beispiel für Anwendungen des gattungsgemäßen Verfahrens ist die Bestimmung der dreidimensionalen Anisotropie von dünnen Schichten, die direkt als optische Komponenten, bspw. als Retarder oder Polarisatoren, in Flachbildschirmen eingesetzt werden, oder die als Photoalignmentschichten zur Herstellung dieser Komponenten Anwendung finden, um die Blickwinkelabhängigkeit der Displays messen oder steuern zu können.

In letzter Zeit wurden Verfahren entwickelt, um die Anisotropie von dünnen Polymerschichten mit Hilfe von polarisiertem Licht definiert einzustellen und diese Anisotropie durch Tempern in der flüssigkristallinen Phase zu verstärken (vgl. z. B. J. Stumpe et al., SPIE Vol.3800, 1999, Seiten 150 - 163). Um das Ergebnis dieses Herstellungsverfahrens kontrollieren zu können, ist die dreidimensionale Bestimmung des Brechungsindex in der Schicht erforderlich. Eine hochgenaue Bestimmung des Brechungsindex in allen drei Raumrichtungen bereits nach dem Bestrahlen ist dabei sehr wichtig, um das Resultat des nachfolgenden, durch Tempern hervorgerufenen Selbstorganisationsprozesses einschätzen zu können.

### Stand der Technik

Zur Bestimmung des Brechungsindex von Schichten in allen drei Raumrichtungen sind bisher unterschiedliche Verfahren bekannt. So kann für absorbierende Proben die dreidimensionale Anisotropie der Schicht mit Hilfe von UV-Spektroskopie unter veränderlichem Einfallswinkel bestimmt werden, wie dies bspw. in T. Srikhirin et al., ChemPhysChem, 2002, 3, Seiten 335 - 342, beschrieben ist. Hierbei wird die dünne Schicht auf ein Glassubstrat aufgebracht und mit dem Glassubstrat zwischen zwei Halbkugeln eines Materials mit geeignetem Brechungsindex vermessen. Durch diese Immersionstechnik werden winkelabhängige Reflexionsverluste an den Grenzflächen verringert, deren Vermeidung gerade bei der Absorptionsspektroskopie sehr wichtig ist. Die UV-Spektroskopie zur Bestimmung der dreidimensionalen Anisotropie eignet sich jedoch nur bei ausreichend absorbierenden Schichten.

Für transparente Schichten werden daher, insbesondere bei Schichtdicken im Bereich von 1 µm oder darunter, ellipsometrische Verfahren eingesetzt, mit denen die Anisotropie über die Doppelbrechung in der Schicht erfasst wird. So setzen bspw. C. C. Jung et al., Mol. Cryst. Liq. Cryst., 2002, Vol. 375, Seiten 713 - 721, die sog. Prismenkopplermethode mit polarisiertem Licht ein, um Schichten mit einer Schichtdicke um 1 µm zu vermessen. Hierbei werden durch Einkopplung des Lichts über ein Prisma Wellenleitermoden in der Schicht unter Einfallswinkeln angeregt, die durch die Brechungsindizes der Schicht bestimmt sind. Wird hierbei ein Prisma mit einem hohen Brechungsindex eingesetzt, so wird mit parallel zur Einfallsebene polarisiertem Licht durch die Brechung in der Schicht auch der Brechungsindex in der Schichtnormalen zugänglich. Leider existieren nur Wellenleitermoden bei optischen Schichtdicken (n x d), die größer als die Wellenlänge des eingesetzten Lichts sind. Um den absoluten Brechungsindex und die Schichtdicke unabhängig voneinander bestimmen zu können, werden mindestens doppelt so dicke Schichten benötigt.

Aus C. M. Ramsdae et al., Adv. Mat., 2002, 14 (3), Seiten 212 - 215, ist ein weiteres Verfahren zur dreidimensionalen Bestimmung des Brechungsindex von Schichten bekannt. Bei diesem Verfahren wird eine Kombination von Reflexionsellipsometrie und Transmissionsellipsometrie unter variablem Einfallswinkel eingesetzt, um die Genauigkeit des Messverfahrens zu verbessern. Dennoch führt dieses Verfahren bei der Vermessung dünner transparenter Schichten für viele Anwendungen in der Praxis noch nicht zu ausreichend genauen Ergebnissen.

Dies liegt auch an Mehrdeutigkeiten, die bei der Vermessung von dünnen anisotropen Schichten mittels Ellipsometrie auftreten, wie dies auch in E. G. Bortchagovsky, Thin Solid Films 307 (1997), 192 - 199 näher ausgeführt ist. In dieser Druckschrift, die sich mit theoretischen Berechnungen zur Reflexionsellipsometrie befasst, wird zur Vermeidung dieser Problematik vorgeschlagen, die Reflexionseigenschaften des eingesetzten Substrates durch Bedeckung mit einer dicken transparenten Schicht gezielt zu beeinflussen.

Die Aufgabe der vorliegenden Erfindung besteht darin, ein Verfahren sowie eine Vorrichtung zur dreidimensionalen Bestimmung des Brechungsindex von dünnen transparenten Schichten anzugeben, die eine hochgenaue Messung des Brechungsindex in allen drei Raumrichtungen ermöglichen.

### Darstellung der Erfindung

Die Aufgabe wird mit dem Verfahren gemäß Patentanspruch 1 sowie der Vorrichtung gemäß Patentanspruch 9 gelöst. Vorteilhafte Ausgestaltungen des Verfahrens sowie der Vorrichtung sind Gegenstand der Unteransprüche oder lassen sich aus der nachfolgenden Beschreibung sowie den Ausführungsbeispielen entnehmen.

Bei dem vorliegenden Verfahren zur dreidimensionalen Bestimmung des Brechungsindex von transparenten Schichten wird die Schicht in bekannter Weise unter verschiedenen Einfallswinkeln mit polarisiertem Licht durchstrahlt und Änderungen der Polarisation des Lichtes beim Durchgang durch die Schicht gemessen und ausgewertet. Das vorliegende Verfahren zeichnet sich dadurch aus, dass die Messung durch ein Immersionsmedium hindurch erfolgt, zwischen das die Schicht, ggf. aufgebracht auf ein transparentes Trägersubstrat, eingebracht wird. Unter der zu vermessenden Schicht ist hierbei auch ein Schichtsystem aus mehreren Schichten, eine Folie oder ein Film zu verstehen. Unter Immersionsmedium wird in der vorliegenden Patentanmeldung ein Medium verstanden, das zu einem im Vergleich zum Übergang Luft/Schicht bzw. Luft/Substrat verringerten Brechungsindexsprung führt, d.h. einen höheren Brechungsindex als Luft aufweist. Vorzugsweise wird ein flüssiges oder festes Immersionsmedium mit einem Brechungsindex gewählt, der zumindest annähernd gleich dem Brechungsindex des Substrates und/oder dem erwarteten mittleren Brechungsindex der zu vermessenden Schicht ist.

Durch den Einsatz des vorliegenden Verfahrens bei der Vermessung von dünnen transparenten Schichten lässt sich überraschender Weise die Genauigkeit bei der Bestimmung des Brechungsindex in den drei Raumrichtungen gegenüber der herkömmlichen Transmissionsellipsometrie unter veränderlichem Einfallswinkel um zwei Größenordnungen steigern. Dies ermöglicht die Bestimmung der optischen Anisotropie in den drei Raumrichtungen sowie einer etwaigen Verkippung des Brechungsindexellipsoids mit hoher Genauigkeit. Mit dem Verfahren lässt sich auch der absolute Brechungsindex der vermessenen Schicht bestimmen. Gegenüber dem Verfahren der Reflexionsellipsometrie besteht der zusätzliche Vorteil in der Unempfindlichkeit gegenüber ultradünnen Oberflächenschichten, die sich auf der zu charakterisierenden Schicht bilden und durch andere optische Eigenschaften die Messung stören können.

Das Verfahren eignet sich insbesondere für die Vermessung von dünnen transparenten Schichten mit Schichtdicken unterhalb von 1 µm. Für sehr dünne Schichten kleiner 50 nm wird durch das vorliegende Verfahren die genaue optische Bestimmung der dreidimensionalen Anisotropie bei Wellenlängen, für die der Film transparent ist, erst möglich. Bei dickeren Filmen bzw. Schichten lassen sich mit dem vorliegenden Verfahren Gradienten, auch Tilt-Gradienten, genauer bestimmen als mit den bisher eingesetzten Verfahren.

Die Auswertung der ellipsometrischen Messungen erfolgt in gleicher Weise wie bei bereits bekannten Verfahren der Transmissionsellipsometrie unter veränderlichem Einfallswinkel. Hierfür wird beispielhaft auf die in der Beschreibungseinleitung erläuterten Veröffentlichungen verwiesen. Zur Bestimmung der Schichtdicke der vermessenen Schicht, die für die Auswertung erforderlich ist, können übliche Verfahren der Schichtdickenmessung, bspw. die Reflexionsellipsometrie oder die Rasterkraftmikroskopie, eingesetzt werden.

In einer vorteilhaften Ausführungsform des vorliegenden Verfahrens wird als Immersionsmedium eine Flüssigkeit eingesetzt. Diese Flüssigkeit wird in eine Kammer eingefüllt, in der die Schicht auf dem transparenten Substrat vermessen wird. Durch Drehung des Substrates mit der aufgebrachten Schicht, im Folgenden als Probe bezeichnet, in der Kammer, bspw. durch eine manuelle mechanische Einrasttechnik oder mit Hilfe eines Drehmotors, kann der Einfallswinkel des durch die Kammer geleiteten polarisierten Lichtstrahls auf die Schicht für die Messung verändert werden. Der polarisierte Lichtstrahl wird im Folgenden auch als Messstrahl bezeichnet.

In einer weiteren Ausgestaltung des vorliegenden Verfahrens werden zwei transparente Festkörperhälften als Immersionsmedium eingesetzt. Diese beiden Festkörperhälften werden mit ihren planen, dem Substrat bzw. der Schicht zugewandten Flächen über eine Immersionsflüssigkeit in Kontakt mit der Schicht und dem Substrat gebracht und zusammen mit der Probe im Messstrahl gedreht. Die Drehung kann hierbei in gleicher Weise wie bei der vorangehenden Ausführungsform erfolgen. Vorzugsweise werden als Festkörperhälften zwei Halbkugeln, bspw. aus Glas, oder zwei Halbzylinder eingesetzt. Bei der Verwendung von Halbzylindern ist die Drehrichtung auf eine Dimension beschränkt, um bei jeder Winkelstellung einen senkrechten Einfall des Messstrahls auf die Oberfläche dieses Immersionsmediums zu gewährleisten. Die beiden Festkörperhälften werden hierbei möglichst spannungsfrei gehaltert, um Spannungsdoppelbrechung zu vermeiden. In einer besonders vorteilhaften Ausführungsform werden die Festkörperhälften während der Messung nicht mit einer Druckkraft in Richtung der Probe beaufschlagt. Vielmehr wird die Wirkung der Kapillarkräfte der Immersionsflüssigkeit ausgenutzt, durch die die Probe und die Festkörperhälften bereits ausreichend zusammen gehalten werden.

Die vorliegende Vorrichtung zur Durchführung des Verfahrens weist eine Transmissions-Messeinrichtung zur Messung einer Änderung der Polarisation beim Durchgang von polarisiertem Licht, des Messstrahls, durch eine Probe sowie eine Dreheinrichtung für die Probe auf. Eine derartige Transmissions-Messeinrichtung setzt sich bspw. aus einer Lichtquelle, ein oder mehreren Polarisatoren vor und hinter dem Messvolumen für die Probe sowie einem Photodetektor zur Messung der transmittierten Intensität zusammen. Die Vorrichtung weist ferner eine Halterung für ein Immersionsmedium auf, die so ausgebildet ist, dass die Probe zwischen das Immersionsmedium einbringbar und in oder mit dem Immersionsmedium relativ zur Strahlachse des Messstrahls drehbar ist.

In einer vorteilhaften Ausgestaltung dieser Vorrichtung wird die Halterung durch eine Kammer für ein flüssiges Immersionsmedium gebildet, die Ein- und Austrittsflächen für den Messstrahl aufweist. Bei dieser Ausgestaltung kann die Probe über einen Drehstift, an dem die Probe gehaltert ist, im Immersionsmedium und somit im Messstrahl gedreht werden. Eine alternative Ausgestaltung sieht eine zylinderförmige Kammer vor, in die die Probe eingebracht wird. Bei dieser Ausgestaltung kann die gesamte Kammer zusammen mit der Probe im Messstrahl gedreht werden, beispielsweise über einen Drehteller, auf dem die Kammer aufliegt. In einer weiteren vorteilhaften Ausgestaltung ist die Halterung für die Aufnahme und Fixierung der beiden Festkörperhälften ausgebildet, die das Immersionsmedium bilden, und mit der Dreheinrichtung verbunden.

Die Halterung mit der Dreheinrichtung kann selbstverständlich auch getrennt zur Verfügung gestellt und in vorhandene Transmissionsellipsometer eingesetzt werden.

### Kurze Beschreibung der Zeichnungen

Das vorliegende Verfahren sowie die zugehörige Vorrichtung werden nachfolgend anhand von Ausführungsbeispielen in Verbindung mit den Zeichnungen nochmals kurz erläutert. Hierbei zeigen:
- Fig. 1: eine Darstellung einer zu vermessenden Schicht auf einem Trägersubstrat mit dem zugeordneten Achsensystem;
- Fig. 2: ein Beispiel für einen Ausschnitt aus einer Messanordnung bzw. Vorrichtung zur Durchführung des vorliegenden Verfahrens;
- Fig. 3: ein weiteres Beispiel für einen Ausschnitt aus einer Messanordnung bzw. Vorrichtung zur Durchführung des vorliegenden Verfahrens;
- Fig. 4: ein Beispiel für das Ergebnis der Vermessung einer Polymerschicht der Dicke 137,7 nm im Vergleich zu theoretischen Werten; und
- Fig. 5: einen Vergleich der Messergebnisse nach der Auswertung der Messung gemäß Figur 4 mit Messergebnissen, wie sie mit einer normalen transmissionsellipsometrischen Messung der selben Probe erhalten wurden.

### Wege zur Ausführung der Erfindung

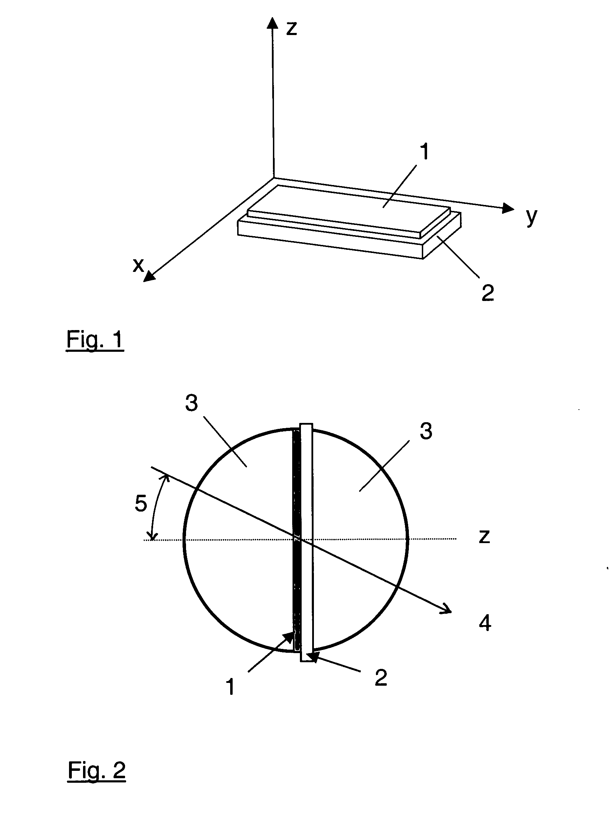

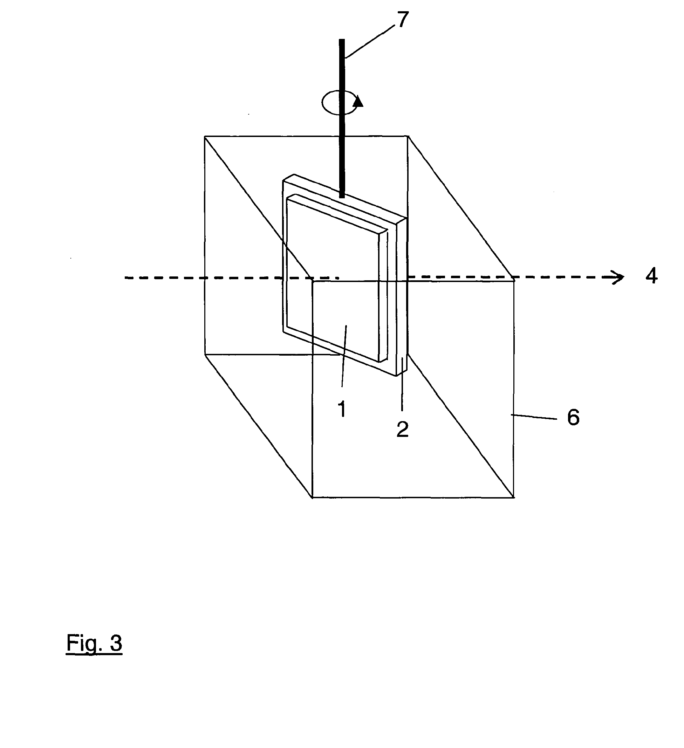

Figur 1 zeigt beispielhaft eine Probe, bestehend aus der zu vermessenden anisotropen Schicht 1, die auf ein Trägersubstrat 2, im vorliegenden Beispiel ein Quarzglasträger, aufgeschleudert wurde. Als beispielhafte Schicht 1 wird eine 137,7 nm dicke Polymerschicht, ein Azobenzenseitenkettenpolymer, eingesetzt. Mit dem vorliegenden Verfahren werden die Brechungsindizes der Schicht 1 in allen drei Raumrichtungen (x, y, z) bestimmt. Hierzu wird die Probe in oder zwischen ein Immersionsmedium mit zumindest ähnlichem Brechungsindex wie das Trägersubstrat 2 eingebracht. Dies kann mit Hilfe von Festkörperhälften, bspw. Halbkugeln, Halbzylinder oder Prismen, in Verbindung mit einer Immersionsflüssigkeit erfolgen. Ein Beispiel hierzu ist in Figur 2 dargestellt. In einer alternativen Ausgestaltung kann die Probe auch in eine Kammer gebracht werden, die mit einer Immersionsflüssigkeit gefüllt ist oder gefüllt wird, wie dies in Figur 3 veranschaulicht ist.

Figur 2 zeigt ein erstes Beispiel für einen Ausschnitt aus einer Messanordnung gemäß der vorliegenden Erfindung. Hierbei werden zwei Halbkugeln 3 aus dem Material des Trägersubstrates 2, im vorliegenden Beispiel Glas, eingesetzt, zwischen die die Probe eingebracht wird. Die auf Seite des Substrats 2 angeordnete Halbkugel 3 weist eine um die Substratdicke verringerte Mittenhöhe auf, so dass die beiden Halbkugeln 3 mit der dazwischen angeordneten Probe eine Kugel bilden. Die Dicke der zu vermessenden Schicht 1 von 137,7 nm kann hierbei vernachlässigt werden. Vor dem Verbinden der beiden Halbkugeln 3 mit der Probe wird ein Immersionsöl zwischen die beiden Halbkugeln 3 und die Probe gebracht. Die gesamte Anordnung mit der Probe wird von einer in der Figur nicht dargestellten Halterung fixiert, die mit einer Dreheinrichtung zur Drehung der Probe im Messstrahl 4 verbunden ist. Die Halterung ist so konstruiert, dass Spannungsdoppelbrechung in den Halbkugeln 3 vermieden wird. Hierzu kann die Halterung entweder nur an der Probe angreifen, wobei die Halbkugeln 3 und die Probe allein durch die Kapillarkräfte der Immersionsflüssigkeit zusammen gehalten werden, oder an den Halbkugeln 3, wobei dann mit Hilfe von schwachen Federn oder mit fein einstellbaren Schrauben nur leichter Druck auf die Halbkugeln 3 ausgeübt wird. Durch Drehung der Probe mit den Halbkugeln 3 im Messstrahl 4 kann der Einfallswinkel 5 des Messstrahls 4 auf die Schicht 1 während der Messung verändert werden, um die Messung mit unterschiedlichen Einfallswinkeln durchzuführen.

Ein weiteres Beispiel für einen Ausschnitt aus einer Vorrichtung gemäß der vorliegenden Erfindung ist in Figur 3 dargestellt. Dieser Teil der Vorrichtung besteht aus einer Kammer 6, in der über einen Drehstift 7 eine drehbare Halterung für die Probe angebracht ist. Die Kammer 6 wird dann mit einer Immersionsflüssigkeit gefüllt. Sie ist so ausgebildet, dass der Messstrahl 4 durch die Kammer 6 und die Probe gelangen kann. Hierzu kann die Kammer 6 mit einem zum Messstrahl 4 senkrechten Eintrittsfenster und einem zum Eintrittsfenster parallelen Austrittsfenster ausgestaltet sein, wobei beide Fenster mit Antireflexschichten versehen werden können. Der Drehstift 7 kann entweder von unten durch eine Durchgangsöffnung mit einer Dichtung in die Kammer eingebracht werden oder von oben ohne Dichtung in die Flüssigkeit eingetaucht werden, wie dies im vorliegenden Beispiel realisiert ist. Diese Messanordnung hat den Vorteil eines einfachen Aufbaus und vermeidet das Problem der Spannungsdoppelbrechung im Immersionsmedium. Um eine etwaige Änderung des Brechungsindex der Immersionsflüssigkeit durch Verdunstung zu vermeiden, kann die Kammer 6 auch mit einer aufschiebbaren Abdeckung versehen werden, die in der Mitte eine Durchgangsöffnung für den Drehstift 7 aufweist.

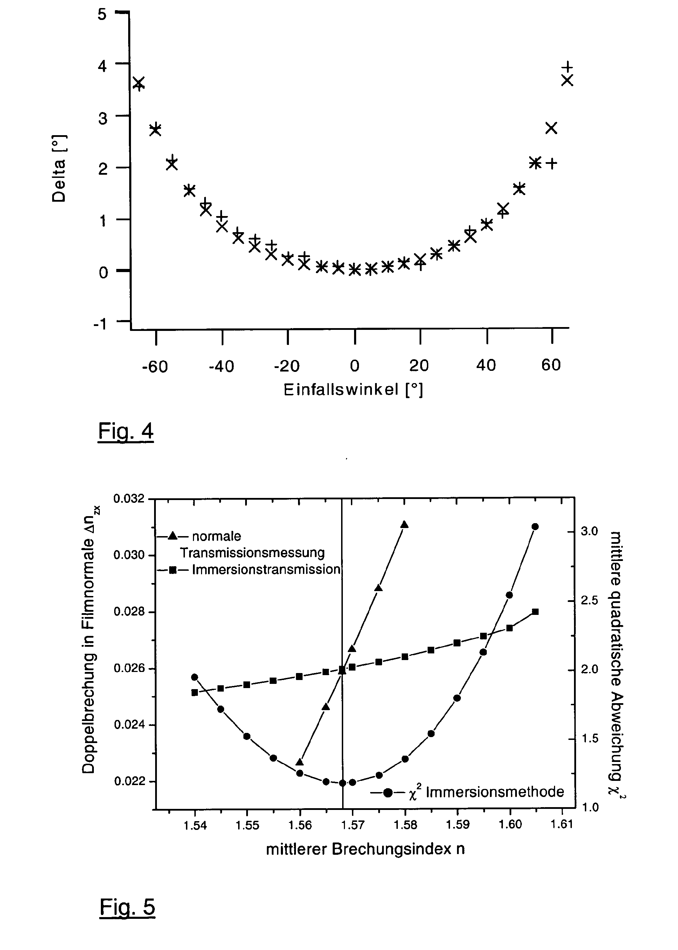

Figur 4 zeigt das Ergebnis einer Transmissionsellipsometriemessung mit dem Verfahren der vorliegenden Erfindung an der bereits vorgestellten Probe. Die Messung wurde mit einer Messanordnung gemäß Figur 2 durchgeführt, wobei die Halbkugeln 3 durch die Kapillarkraft des Immersionsöls zusammen gehalten wurden. Die Messkurve zeigt deutlich die Zunahme des ellipsometrischen Messparameters Δ, der den Gangunterschied zwischen s- und p-polarisiertem Licht beschreibt, mit zunehmendem Einfallswinkel. Diese Zunahme entspricht unter korrekter Beachtung des Vorzeichens einer Vorzugsorientierung in der Ebene der vermessenen Schicht. Das aus dieser Messung erhaltene Ergebnis ergibt als mittleren Brechungsindex n = nₓ + n_{y} + n_{z} = 1,5681 (1) und als Doppelbrechung in z-Richtung Δn_{zx} = n_{z} - nₓ = -0,0259. In der Figur ist die Überlagerung mit den durch theoretische Modellierung für diese Werte erhaltenen Punkten zu erkennen.

Figur 5 zeigt schließlich einen Vergleich des Ergebnisses dieser Messung mit dem Ergebnis einer Messung an der gleichen Probe, die mittels üblicher Transmissionsellipsometrie ohne ein Immersionsmedium durchgeführt wurde. Für die Auswertung wurde für beide Messungen jeweils der mittlere Brechungsindex n als fest angenommen und dann die Doppelbrechung in z-Richtung durch Anpassen an die theoretische Kurve bestimmt. Hierdurch wird die Abhängigkeit von n und Δn_{zx} erhalten, wie sie in der Figur 5 ersichtlich ist. Die Messkurven mit und ohne Immersion schneiden sich genau bei dem Brechungsindex n, der mit dem vorliegenden Verfahren bereits vorhergesagt wurde. Damit ist gezeigt, dass mit dem vorliegenden Verfahren sowohl der absolute Brechungsindex als auch die Anisotropie einer dünnen Schicht bestimmt werden kann. Zum Vergleich ist in der Figur 5 auch die Abweichung zwischen theoretischen und experimentellen Werten als mittlere quadratische Abweichung aufgetragen. Man erkennt die hervorragende Übereinstimmung des Minimums der mittleren quadratischen Abweichung mit dem Schnittpunkt der Messungen aus dem vorliegenden Verfahren und der Transmissionsmessung ohne Immersion. Ein derartiges Minimum wird bei der Durchführung der üblichen Transmissionsellipsometrie nicht erreicht (in der Figur nicht dargestellt), so dass durch Auswertung der normalen Messung ohne Immersion über eine freie Anpassung ein absoluter Brechungsindex von 1,584 und ein Δn_{zx} von -0,0327 resultieren würde. Diese Werte liegen weitab von den tatsächlichen Werten.

### Bezugszeichenliste

| | |
|---|---|
| 1 | Zu vermessende Schicht |
| 2 | Trägersubstrat |
| 3 | Halbkugeln als Immersionsmedium |
| 4 | Messstrahl |
| 5 | Einfallswinkel |
| 6 | Kammer |
| 7 | Drehstift |

## Patentansprüche

1. Verfahren zur dreidimensionalen Bestimmung des Brechungsindex von transparenten Schichten, bei dem die Schicht (1) unter verschiedenen Einfallswinkeln (5) mit polarisiertem Licht durchstrahlt und Änderungen der Polarisation des Lichtes beim Durchgang durch die Schicht (1) gemessen und ausgewertet werden,
**dadurch gekennzeichnet,**
**dass** die Messung durch ein Immersionsmedium (3) hindurch erfolgt, zwischen das die Schicht (1) eingebracht wird.

2. Verfahren nach Anspruch 1,
**dadurch gekennzeichnet,**
**dass** die Schicht (1) auf ein transparentes Substrat (2) aufgebracht und auf dem Substrat (2) vermessen wird.

3. Verfahren nach Anspruch 2,
**dadurch gekennzeichnet,**
**dass** ein Immersionsmedium (3) mit einem Brechungsindex eingesetzt wird, der zumindest annähernd einem Brechungsindex des Substrates (2) entspricht.

4. Verfahren nach einem der Ansprüche 1 bis 3,
**dadurch gekennzeichnet,**
**dass** die Schicht (1) in einer Kammer (6) vermessen wird, in die ein flüssiges Immersionsmedium (3) eingebracht wird.

5. Verfahren nach einem der Ansprüche 1 bis 3,
**dadurch gekennzeichnet,**
**dass** das Immersionsmedium (3) durch zwei Festkörperhälften gebildet wird, zwischen die die Schicht (1) eingebracht wird.

6. Verfahren nach Anspruch 5,
**dadurch gekennzeichnet,**
**dass** zwei Halbkugeln oder Halbzylinder als Immersionsmedium (3) eingesetzt werden.

7. Verfahren nach Anspruch 6,
**dadurch gekennzeichnet,**
**dass** die zwei Halbkugeln oder Halbzylinder durch Kapillarkräfte an der Schicht (1) und dem Substrat (2) gehalten werden.

8. Verfahren nach einem der Ansprüche 1 bis 7 zur Vermessung von Schichten für Flachbildschirme, optische Datenspeicherung oder optische Wellenleiter.

9. Vorrichtung zur Durchführung des Verfahrens nach einem der Ansprüche 1 bis 8, mit einer Transmissons-Messeinrichtung zur Messung einer Änderung der Polarisation beim Durchgang von polarisiertem Licht durch eine Probe und einer Dreheinrichtung für die Probe,
**dadurch gekennzeichnet,**
**dass** eine Halterung für ein Immersionsmedium (3) vorgesehen und so ausgebildet ist, dass die Probe zwischen das Immersionsmedium (3) einbringbar und in oder mit dem Immersionsmedium (3) relativ zu einer Strahlachse des polarisierten Lichtes drehbar ist.

10. Vorrichtung nach Anspruch 9,
**dadurch gekennzeichnet,**
**dass** die Halterung eine Kammer (6) für ein flüssiges Immersionsmedium (3) ist, die Ein- und Austrittsflächen für das polarisierte Licht aufweist.

11. Vorrichtung nach Anspruch 10,
**dadurch gekennzeichnet,**
**dass** die Kammer (6) zylinderförmig ausgebildet und so mit der Dreheinrichtung gekoppelt ist, dass sie mit Hilfe der Dreheinrichtung drehbar ist.

12. Vorrichtung nach Anspruch 9,
**dadurch gekennzeichnet,**
**dass** die Halterung für die Aufnahme und Fixierung von zwei das Immersionsmedium (3) bildende Festkörperhälften ausgebildet und mit der Dreheinrichtung verbunden ist.

13. Halterung für ein Immersionsmedium zur Durchführung des Verfahrens nach einem der Ansprüche 1 bis 8, mit einer Dreheinrichtung für die Probe, wobei die Halterung so ausgebildet ist, dass die Probe zwischen das Immersionsmedium (3) einbringbar und in oder mit dem Immersionsmedium (3) relativ zu einer Strahlachse des polarisierten Lichtes drehbar ist.

14. Halterung nach Anspruch 13, die durch eine Kammer (6) für ein flüssiges Immersionsmedium (3) gebildet ist, die Ein- und Austrittsflächen für das polarisierte Licht aufweist.

15. Halterung nach Anspruch 14, bei der die Kammer (6) zylinderförmig ausgebildet und so mit der Dreheinrichtung gekoppelt ist, dass sie mit Hilfe der Dreheinrichtung drehbar ist.

16. Halterung nach Anspruch 13, die für die Aufnahme und Fixierung von zwei das Immersionsmedium (3) bildende Festkörperhälften ausgebildet und mit der Dreheinrichtung verbunden ist.
